Europäisches Patentamt

European Patent Office

Office européen des brevets

(19)

(11) EP 0 398 830 B1

# (12) FASCICULE DE BREVET EUROPEEN

(45) Date de publication et mention
de la délivrance du brevet:
**26.02.1997 Bulletin 1997/09**

(51) Int Cl.6: **G06F 17/14**, H04N 7/30

(21) Numéro de dépôt: **90460019.4**

(22) Date de dépôt: **17.04.1990**

(54) **Procédé et dispositif de compression de données d'image par transformation mathématique**

Verfahren und Einrichtung zur Bilddatenkompression durch mathematische Transformation

Method and apparatus for compressing image data by mathematical transformation

(84) Etats contractants désignés:
**DE GB IT**

(30) Priorité: **18.04.1989 FR 8905298**

(43) Date de publication de la demande:
**22.11.1990 Bulletin 1990/47**

(73) Titulaires:
• **FRANCE TELECOM**
**75015 Paris (FR)**
• **TELEDIFFUSION DE FRANCE**
**75932 Paris Cédex 15 (FR)**

(72) Inventeurs:
• **Guillemot, Christine**
**F-35700 Rennes (FR)**
• **Carlac'h, Jean-Claude**
**F-35700 Rennes (FR)**
• **Duhamel, Pierre**
**F-92130 Issy-Les-Moulineaux (FR)**

(74) Mandataire: **Corlau, Vincent**
**c/o Cabinet Vidon,**
**Immeuble Germanium,**
**80 avenue des Buttes de Coesmes**
**35700 Rennes (FR)**

(56) Documents cités:
EP-A- 0 275 979    US-A- 4 189 748
US-A- 4 764 974

• IEEE PROCEEDINGS IP'79, Chicago, Illinois, 6-8 août 1979, pages 233-238, IEEE, New York, US; D.F. NACCARATO et al.: "A direct two-dimensional FFT with applications in image processing"
• PROCEEDINGS OF EUSIPCO-88, FOURTH EUROPEAN SIGNAL PROCESSING CONFERENCE, Grenoble, 5-8 septembre 1988, vol. 3, pages 1657-1660, North-Holland, Amsterdam, NL; S. FARKASH et al.: "Transform trellis coding of images at low rates with blocking effect removal"
• ICASSP'85, 1985, pages 1538-1541, IEEE, New York, US; M. VETTERLI: "Fast 2-D discrete cosine transform"
• CONFERENCE RECORD OF THE 20TH ASILOMAR CONFERENCE ON SIGNALS, SYSTEMS & COMPUTERS, Pacific Grove, CA, 10-12 novembre 1986, pages 25-29, IEEE, New York, US; H. CHUNG: "A new 2-D FFT algorithm requiring only one data pass"
• IEEE TRANSACTIONS ON ACOUSTICS, SPEECH, AND SIGNAL PROCESSING, vol. 36, no. 10, octobre 1988, pages 1642-1650, IEEE, New York, US; Z.-J. MOU et al.: "In-place butterfly-style FFT of 2-D real sequences"

EP 0 398 830 B1

## Description

L'invention concerne un procédé de compression de données représentatives d'un signal d'image, du type consistant à décomposer l'image en blocs formant matrices de pixels (élément d'image), à effectuer une opération mathématique de transformation sur chaque matrice de pixels selon une loi de transformation permettant d'obtenir une matrice résultante d'éléments représentatifs de l'activité de l'image, et à éliminer dans chaque matrice résultante les éléments de faible pertinence psychovisuelle par seuillage par rapport à une matrice de seuils de référence.

Plus précisément, l'invention concerne un procédé de mise en oeuvre d'une nouvelle loi de transformation des matrices de pixels, permettant la mise en oeuvre à coût réduit du procédé de compression.

L'invention s'applique avantageusement mais non limitativement à la compression d'images émises en séquences d'images à débit réduit, du type utilisé en audiovidéographie, photovidéotex, télésurveillance ou en visiophonie et visioconférence sur le réseau téléphonique commuté, ou sur le réseau numérique à intégration de service. Toutefois, l'invention s'applique également à tout autre type d'images ou de séquence d'images, y compris le codage d'images de télévision numérique, et même de télévision à haute définition.

Dans ce but, on connaît déjà le document de brevet US-A-4 189 748 (REIS), qui décrit un dispositif de réduction du débit d'un signal vidéo utilisant une transformation puis une séparation des coefficients transformés selon un critère de pertinence. Les coefficients les plus pertinents sont systématiquement transmis. Les autres coefficients ne sont transmis que s'ils sont supérieurs à un seuil. La transformation utilisée est une combinaison de deux transformations à une dimension.

On connait également diverses lois de transformation de matrice de pixels, dont les principales sont la Transformée de Fourier Rapide (TFR), en anglais FFT (Fast Fourier Transform), et la Transformée en Cosinus Discrète (TCD), en anglais DCT : (Discrete Cosinus Transform).

Le document de brevet US-A-4 764 974 (WOODS) présente par exemple un procédé de calcul d'une transformée de Fourier Rapide (FFT) à deux dimensions.

Le document IEEE PROCEEDINGS IP'79, Chicago, Illinois, 6-8 Août 1979, pages 233-238, IEEE, New-York, US, (NACCARATO) présente quant à lui un algorithme de calcul de FFT simplifié utilisant l'inversion de bits, et calculant directement une transformation 2D.

Ces deux documents concernent spécifiquement la mise en oeuvre d'une transformation de Fourier rapide. En revanche, un objectif de l'invention est de fournir une nouvelle loi de transformation (mettant en oeuvre notamment une TFR) pour améliorer l'efficacité (qualité et/ou quantité d'opérations) de la compression de données.

Au moins trois paramètres gouvernent le choix de la loi de transformation, pour une application donnée :

- le taux de compression du signal d'image ;
- la qualité psychovisuelle de l'image restituée à partir du signal d'image comprimé ;
- le coût "vitesse de traitement x surface de semiconducteur" de mise en oeuvre de la loi de transformation sur circuit intégré.

Ainsi, on préfère généralement actuellement utiliser la TCD comme loi de transformation, pour la compression d'image, du fait qu'elle permet une concentration supérieure de "l'activité" ("énergie") de l'image, par rapport à la TFR En d'autres termes, la matrice transformée résultant de l'opération de TCD sur la matrice de pixels initiale, comporte moins d'éléments significatifs, d'un point de vue psychovisuel. La quantité d'informations relative à l'image est donc inférieure, ce qui permet une transmission du signal d'image à plus faible débit.

Toutefois, la mise en oeuvre de la TCD sur les matrices de pixels implique un coût "vitesse de traitement x surface de semiconducteur" supérieur à celui de la TFR.

Tout l'effort récent des spécialistes de ce domaine a donc été récemment de trouver des moyens de mise en oeuvre de la TCD qui minimise ce coût.

La TCD mise en oeuvre sur un bloc d'image NxN s'exprime par la formule :

$$F(u,v) = \frac{4\ C(u)\ C(v)}{N^2} \sum_{i=0}^{n-1} \sum_{j=0}^{n-1} f(i,j)\ \frac{\cos(2i+1)\ \pi u}{2N} \times \frac{\cos(2j+1)\ \pi v}{2N}$$

avec:

i,j : coordonnées spatiales des éléments de la matrice de pixel,

u,v: coordonnées des coefficients de la matrice transformée

$C(u) = 1 / \sqrt{2}$ si $u = 0$

$C(v) = 1$ si $u \neq 0$

f(i,j) : amplitude du pixel de coordonnées (i,j).

Les coefficients de pondération c(u) et c(v) ont pour objectif de tenir compte de l'effet de bord dans le bloc transformé.

Le calcul de la double somme, effectué de façon systématique, conduit à réaliser $N^2$ multiplications, multiplié par $N^2$ coefficients, soit $N^4$ valeurs à sommer.

Or, le coût de la mise en oeuvre de la TCD, sur circuit intégré, est directement lié au nombre d'additions et de multiplications à réaliser. De plus, il faut noter que le coût d'une opération de multiplication est environ 5 à 7 fois supérieur à celui d'une addition.

Deux approches ont été tentées pour diminuer le coût de mise en oeuvre de la loi de transformation :

- la décomposition lignes/colonnes de la mise en oeuvre de la TCD sur la matrice de pixels;
- la mise en oeuvre de la TCD directement en deux dimensions, à travers une décomposition en étapes élémentaires globalement moins coûteuses.

En illustration de la première approche, on peut citer la méthode préconisée par CHEN et autres (voir l'article W. H. CHEN, C.H. SMITH, S.C FRALICK, "A fast computational algorithm for the Discrete Cosine Transform", (Un algorithme rapide de calcul pour la TCD), IEEE Trans. on Communication, vol. COM-25, sept. 1977.). La méthode présentée consiste, pour l'essentiel, à utiliser les symétries apparaissant dans la matrice de transformation pour réduire le nombre d'opérations. La décomposition en lignes/colonnes revient à effectuer successivement deux jeux de transformées monodimensionnelles, successivement sur les lignes, et sur les colonnes de la matrice respectivement. La matrice intermédiaire, entre les deux jeux de transformation, subit une opération de transposition ligne/colonne, de façon à pouvoir appliquer les mêmes opérations mathématiques indicielles pour les deux jeux de transformations. L'approche de CHEN permet de réduire le coût de la TCD à 256 multiplications et 416 additions pour des matrices de pixels de taille 8x8.

On connaît également une autre méthode fonctionnant sur le même principe, telle que décrite dans l'article de B. G LEE "A new algorithm to compute the discrete cosine Transform", (Un nouvel algorithme de calcul de la TCD), (IEEE trans. ASSP vol.ASSP.32). Cette approche est légèrement moins coûteuse, globalement, car elle ne nécessite plus que 192 multiplications, au prix d'une faible augmentation du nombre d'additions (464 additions).

Enfin, à la différence des méthodes précédentes à factorisation directe, M. VETTERLI et H. NUSSBAUMER ont proposé une méthode par décomposition de la TCD en étapes élémentaires, dans "Algorithmes de transformations de Fourier et en Cosinus mono et bidimensionnels" (Ann. des Télécom. 40 n°9 - 10, 1985°). Selon cette méthode, on décompose la TCD en trois opérations successives, à savoir :

- une permutation des éléments de la matrice de pixels initiale;
- une TFR réalisée sur la matrice permutée;
- un jeu de rotations appliqué à la matrice transformée par la TFR, de façon à obtenir la matrice finale correspondant à la transformée TCD de la matrice de pixels initiale. La TFR sur la matrice permutée est réalisée sous forme de deux jeux de transformations monodimensionnelles, appliqués successivement aux lignes de la matrice initiale permutée, puis aux colonnes de la matrice intermédiaire résultant du premier jeu de transformations monodimensionnelles. Cette méthode représente un coût de 464 additions, et de 192 multiplications, réduites à 176 multiplications à la suite d'une astuce arithmétique.

Un gain supplémentaire a été acquis par VETTERLI, au moyen d'une approche directe à deux dimensions, fondée sur le même type de décomposition en trois opérations successives (voir l'article "Fast 2-D Discrete Cosine Transform" (TCD 2-D rapide), ICASSP 1985). A la différence de la démarche monodimensionnelle, les opérations de permutation, de TFR et de rotation s'effectuent directement en deux dimensions. La TFR, notamment, est réalisée par une approche de transformation polynôminale de la matrice entière. Le coût de cette méthode bidimensionnelle est intéressant, puisqu'il se ramène à 104 multiplications et 460 additions.

La présente invention a pour objectif de fournir un procédé de compression de donnée d'image, par transformation mathématique de matrices de pixels, qui permette d'obtenir un coût encore moindre de mise en oeuvre. Le paramètre coût est très important pour des applications destinées à une diffusion dans le grand public, nécessitant l'acquisition de terminaux de décodage d'image (photovidéotex, TVHD,...).

Plus précisément, les inventeurs ont constaté qu'il est possible non seulement d'utiliser une méthode plus économe pour mettre en oeuvre une transformation de type TCD appropriée à la compression d'image, mais encore que certaines variantes de cette méthode, encore plus économes, sont tout à fait satisfaisantes d'un point de vue psychovisuel, et performantes du point de vue du taux de compression.

Ces variantes sont particulièrement bien adaptées au codage d'images à débit réduit, tout en n'étant pas exclusives de ce type d'application.

Le procédé de l'invention a été élaboré spécifiquement pour le codage à débit réduit d'image, et est particulièrement favorable pour le traitement de blocs d'images de tailles 4x4 pixels, 8x8 pixels ou 16x16 pixels. Dans le cas de la variante la plus complexe, correspondant à une nouvelle méthode de mise en oeuvre d'une TCD, la plus grande efficacité par rapport à la méthode VETTERLI peut s'expliquer, a posteriori, par le fait que l'approche VETTERLI en TCD bidimensionnelle, bien que présentant une très faible complexité arithmétique, a l'inconvénient d'appliquer une structure de calcul non régulière.

Le procédé de l'invention présente en effet à la fois une complexité mathématique faible et une structure régulière, autorisant une mise en oeuvre simple et donc une réalisation matérielle peu coûteuse.

En outre, l'invention est susceptible d'être mise en oeuvre dans un dispositif matériel assurant le meilleur rapport "fréquence de fonctionnement / surface de silicium", aussi bien pour un flot de données entrant à 256 kHz (qui correspond à une transmission d'images fixes codées à 0,25 bits par pixels (bpp) sur réseaux à 64 kbits/s) que pour un flot de données à 27 MHz ( correspondant à la cadence des données de télévision numérique).

Selon l'invention, ces aspects avantageux sont obtenus à l'aide d'un procédé de compression de données représentatives d'un signal d'image, du type consistant à décomposer l'image en blocs formant matrices de pixels, à effectuer une opération mathématique de transformation sur chaque matrice de pixels selon une loi de transformation permettant d'obtenir une matrice résultante d'éléments représentatifs de l'activité de l'image, et à éliminer dans chaque matrice résultante les éléments de faible pertinence psychovisuelle par seuillage par rapport à une matrice de seuils de référence, la dite opération mathématique de transformation étant composée d'une première étape de transposition des éléments de la matrice de pixels par permutation des indices des dits éléments, de façon à symétriser le signal, suivie d'une seconde étape de transformation de la matrice transposée, par transformée de Fourier rapide (TFR).

Comme on le verra ci-après, la TFR peut être réalisée soit par une approche bidimensionnelle, soit par une approche monodimensionnelle, menée partiellement ou totalement à son terme.

Selon une première variante de l'invention, la matrice résultante à laquelle on applique le seuillage de compression, puis le codage, est la matrice obtenue à la suite de la TFR, partielle ou totale, appliquée à la matrice de pixel transposée.

Avantageusement, la TFR est réalisée en appliquant à la matrice de pixels transposée un enchaînement de deux jeux de TFR monodimensionnelles à valeurs réelles, portant successivement sur chacune des lignes de la matrice de pixels permutée, puis sur chacune des colonnes de la matrice intermédiaire résultant du premier jeu de TFR monodimensionnelles. Dans ce cas, on obtient deux sous-variantes, suivant qu'on fasse suivre ou non l'enchaînement des deux jeux de TFR monodimensionnelles par le treillis de calcul destiné à reconstituer la matrice transformée par TFR à valeurs complexes correspondant à la dite matrice de pixels permutée initiale.

Dans ces deux premières variantes de l'invention, on obtient des résultats psychovisuels étonnamment bons, ce qui indique la prépondérance de l'étape de permutation, pour symétrisation du signal dans la chaîne d'étapes composée par VETTERLI pour réaliser une TCD. Ceci permet de négliger, le cas échéant, les étapes ultérieures de VETTERLI.

Toutefois, dans une troisième variante de l'invention, il est possible de réaliser une TCD complète sur la matrice de pixels initiale. La méthode nouvelle de l'invention consiste à effectuer cette TCD complète au moyen d'une approche bidimensionnelle pour les opérations de permutation, et de rotation, mais une approche monodimensionnelle pour l'opération de TFR. Cette double approche, bidimensionnelle et monodimensionnelle, permet de régulariser la succession d'opérations arithmétiques. Le gain ne se traduit pas par une diminution du coût en opérations d'additions et de soustractions, mais bien plutôt en un avantage quant à la gestion d'adresses dans la mise en oeuvre sur circuit intégré. Cet avantage se révèle déterminant pour l'amélioration du coût "vitesse de traitement - surface de silicium" que l'on cherche à minimiser.

Selon une quatrième et une cinquième variantes de l'invention, la matrice résultante sur laquelle on effectue le seuillage, puis le codage est soit la matrice résultant de la TCD élaborée selon l'approche monodimensionnelle, au cours de laquelle on a annulé au moins une partie des coefficients imaginaires obtenus après au moins l'un des deux jeux de TFR monodimensionnelle à valeur réelle (quatrième variante), soit la matrice résultante d'une TFR bidimensionnelle dans laquelle on a effectué le même type d'annulation partielle ou totale des coefficients imaginaires (cinquième variante).

D'autres variantes de l'invention sont également possibles, notamment en combinant l'annulation partielle ou totale des coefficients imaginaires avec le fait de ne pas mener à son terme la TCD du procédé de l'invention.

D'autres caractéristiques et avantages de l'invention apparaîtront à la lecture de la description suivante de modes de mise en oeuvre préférentielle des variantes du procédé de l'invention, donnés à titre illustratif et non limitatif, et des dessins annexés dans lesquels :

- La figure 1 schématise le mode de balayage ligne à ligne des blocs de pixels, au cours de l'étape de permutation préliminaire du procédé de l'invention

- La figure 2 schématise le mode de balayage "zigzag" des blocs de coefficients avant mise en oeuvre, au décodage, du procédé inverse de l'invention dans le cas d'une application de type photovidéotex

- La figure 3 schématise le contenu de la mémoire morte de transcodage en balayage zigzag, sur un bloc de coefficients;

- La figure 4 schématise l'étape de permutation par inversion de bits, de l'étape préliminaire de permutation du procédé de l'invention;

- La figure 5 schématise la succession des quatre étapes de TFR monodimensionnelles ligne, et colonne, avec transpositions matricielles intercalées, du procédé de transformation sur l'invention;

- La figure 6 est un graphe "papillon" (en anglais "Butterfly") illustrant la logique de réalisation de la TFR monodimensionnelle, telle que mise en oeuvre dans le schéma de la figure 5;

- La figure 7 est un schéma illustrant les sous-étapes de permutation matricielle par inversion de bits, dans le processus illustré en figure 5;

- La figure 8 illustre la répartition spatiale des parties réelles et imaginaires, dans la matrice transformée par deux TFR monodimensionnelles à valeur réelle;

- La figure 9 schématise les opérations mises en oeuvre pour restituer les valeurs de transformation en TFR-2D à valeur complexe, suivant les zones géographiques de la matrice;

- La figure 10 schématise la règle d'obtention du symétrique par rapport au point (N/2,N/2) de chacun des coefficients de la matrice NxN, par traitement des bits d'adressage desdits coefficients;

- La figure 11 localise les sept familles de rotation finale de reconstitution de la TCD, selon le procédé de l'invention;

- Les figures 12 à 17 sont des graphes illustrant certains aspects du mode de mise en oeuvre des rotations, pour chacune des sept familles localisées en figure 11.

- La figure 18 représente un circuit avantageux de mise en oeuvre du procédé de l'invention.

- Les figures 19A et 19B schématisent le fonctionnement en pipe-line du circuit de la figure 18, en cas d'entrelacement 4/4 et 1/1 respectivement.

- La figure 20 est un schéma symbolisant les principales variantes de l'invention suivant les étapes de procédé effectivement réalisées.

Le procédé de compression de données d'images de l'invention s'inscrit avantageusement au sein d'un processus de codage à débit réduit d'image, fixe ou mobile.

Un tel processus est constitué essentiellement des étapes suivantes :

- On découpe l'image source en blocs élémentaires de traitement. La taille des blocs correspond avantageusement à un compromis entre d'une part la nécessité d'obtenir un niveau suffisant de décorrélation des pixels, et donc une taille suffisamment grande pour chaque bloc, et d'autre part une taille point trop importante pour chaque bloc de façon à minimiser les complexités de traitement. Dans le mode de réalisation de l'invention présenté ci-après, le découpage préalable de l'image est effectué sur des blocs 8x8 pixels. L'invention s'applique clairement pour des tailles de blocs différentes.

- Une étape de transformation mathématique est effectuée sur chaque bloc découpé dans l'image. L'opération de transformation a pour objectif de concentrer l'information pertinente relative à chaque bloc d'images, sur un volume d'information inférieur à la matrice de pixels formant chaque bloc source. L'opération de transformation, souvent au moyen d'une TFR ou d'une TCD, concentre l'énergie de chaque bloc d'images sur, en général, au plus la moitié du bloc, sauf dans le cas de blocs d'images à grande complexité psychovisuelle.

- Une étape de seuillage, et de quantification de l'information contenue dans les blocs d'images transformés. L'opération de seuillage consiste à éliminer de chaque matrice transformée les éléments d'information qui sont inférieurs à des seuils de perception psychovisuelle déterminés expérimentalement. Ceci est réalisé en superposant à chaque matrice transformée, une matrice de coefficients de seuils. A cette opération de filtrage par seuillage succède une opération de quantification de chaque bloc transformé filtré, qui est représenté par une configuration la plus proche choisie dans un dictionnaire de sous-images de base standardisées.

- Une étape de codage, préférentiellement de codage entropique. (Voir par exemple l'article "A method for the construction of minimum-redundancy codes", David A. HUFFMAN, proceedings of the I.R.E., Septembre 1952, pages 1098 à 1101). D'autres codes entropiques que le code de HUFFMAM peuvent évidemment être employés.

Le mode de réalisation du procédé de compression de données d'images de l'invention, tel que décrit ci-après, est relatif à l'étape de transformation des matrices de pixels, correspondant à des blocs 8x8 découpés dans une image fixe ou mobile à coder.

Le mode de réalisation décrit ci-après correspond à un procédé de compression de données d'images dont certaines étapes peuvent être sélectivement conservées ou supprimées, en fonction des contraintes et des performances requises pour chaque application de compression.

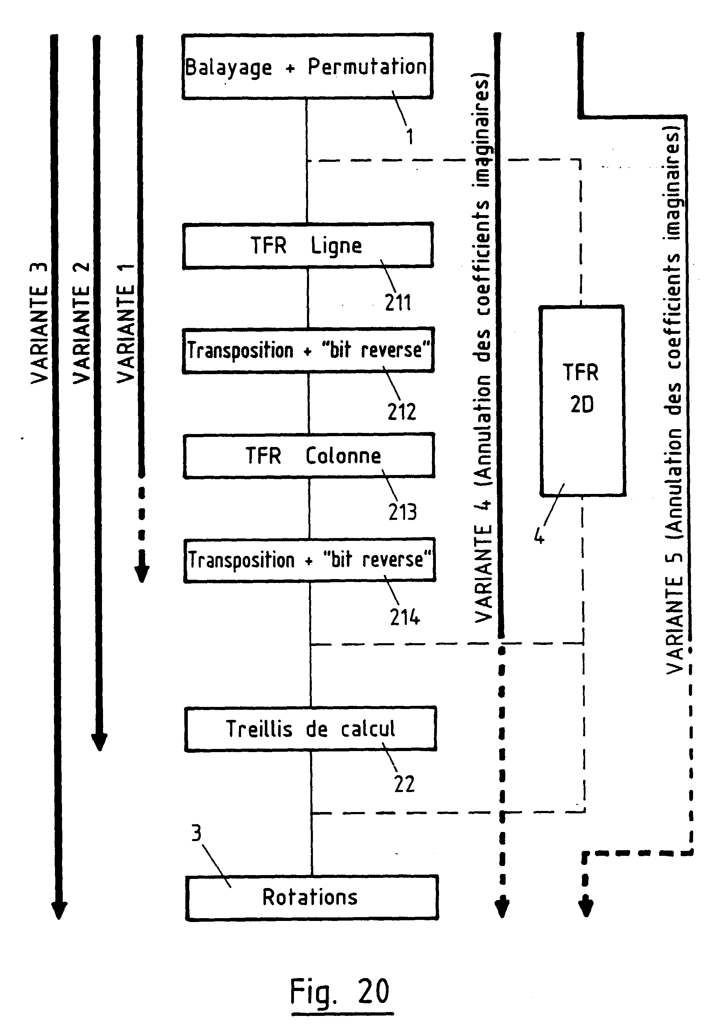

Dans le mode de réalisation le plus complexe de l'invention, le procédé comporte la succession des étapes suivantes (Fig. 20):

1) - une opération de transcodage des matrices pixels sources, réalisée avantageusement sous forme de permutations de pixels combinée à une logique de balayage télévision;

2) - une étape de transformation mathématique de la matrice de pixels transcodée, par TFR-2D à valeur complexe, décomposée sous la forme d'une double TFR-1D à valeur réelle suivie d'une sous-étape de reconstitution de la TFR-2D à valeur complexe, soit plus précisément:

- 21) la double TFR-1D à valeur réelle s'effectue avantageusement de la façon suivante :

-211) TFR réelle sur chacune des lignes de la matrice transcodée ;
-212) transposition matricielle ligne/colonne ;
- 213) TFR à valeur réelle sur chacune des huit lignes obtenues après transposition ;
-214) transposition ligne/colonne de la matrice ainsi obtenue ;

-22) reconstitution de la matrice résultant d'une transformation TFR-2D à valeur complexe, par un jeu d'équations de combinaisons arithmétiques des coefficients de la matrice résultant de la double TFR- 1D à valeur réelle. Le nombre d'équations à calculer est avantageusement réduit en utilisant la symétrie hermitienne du spectre de la transformée de Fourier d'un signal réel ;

3) - reconstitution de la transformée en cosinus discrète, avantageusement sous la forme d'un jeu de rotations à deux dimensions. Dans un mode de réalisation préférentiel de l'invention, ces rotations à deux dimensions sont réalisées en regroupant les équations correspondantes en sept familles distinctes, à traitement homogène au sein de chaque famille.

La réalisation de la totalité des étapes et sous-étapes détaillées ci-dessus correspond au mode de réalisation de l'invention permettant de mettre en oeuvre une TCD optimisée sur les blocs d'image, à coût "vitesse de traitement x surface de semiconducteur" réduit.

Toutefois, comme expliqué en préambule, il est possible de supprimer sélectivement certaines des étapes, à savoir :

- suppression de l'étape 3 (rotations de reconstitution de la TCD). Dans ce cas, l'étape 2 de réalisation de la TFR complexe peut être réalisée soit par la succession des étapes 21 et 22 détaillées plus haut, soit par la réalisation d'une TFR-2D à valeur complexe selon la méthode directe préconisée par VETTERLI.
- dans une autre variante, il est également possible de supprimer l'étape 22 des treillis de calculs de reconstitution de la TFR-2D complexe.
- enfin, dans une variante encore plus simplificatrice, les coefficients imaginaires issus des TFR monodimensionnelles des étapes 211 et 213 peuvent être annulées. Une telle simplification est justifiée dans le cas où la matrice de pixels correspondant à chaque bloc d'image est porteuse d'un signal fortement corrélé.

D'autre part, dans le cas de la suppression de l'étape 23 de rotations finales, et éventuellement de l'étape 22 du treillis de calcul, l'invention couvre également la variante de réalisation dans laquelle la TCD ainsi réalisée, comporte une étape 4 de TFR-2D complexe, ou réelle respectivement, à la place de la paire de TFR monodimensionnelles.

On va maintenant détailler plus précisément le principe et un mode de réalisation préférentiels de chaque étape de la variante complète de l'invention.

Réalisation de la permutation et des transcodages d'entrée :

La permutation est la première opération à réaliser. Elle est effectuée lors de l'écriture des données d'entrée dans la mémoire de 64 mots correspondants à un bloc de 8x8 à transformer, en combinaison avec l'opération de balayage des éléments de la matrice de pixels.

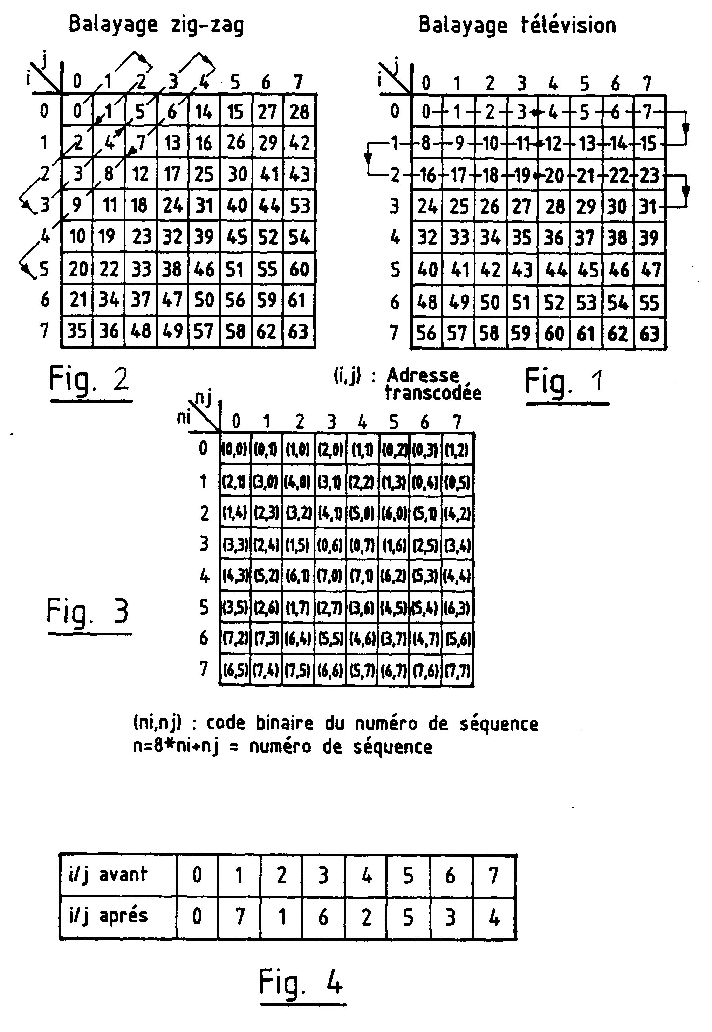

Les données du bloc 8x8 sont introduites selon une suite qui peut être semblable au balayage de télévision ligne à ligne (Fig. 1) dans le cas de la transformée directe (à l'émission). A la réception, on notera qu'il est nécessaire pour réaliser la transformée inverse, d'effectuer un balayage "zigzag" pour les applications de photovidéotex, photosurveillance, visiophonie (Fig. 2), alors qu'un simple balayage ligne à ligne convient pour le décodage en application de télévision.

Les indices de tables (en Fig. 1 et 2) sont les numéros de ligne et de colonne du bloc reconstitué et le contenu de la table est le numéro de la donnée dans la séquence.

Le balayage télévision ne nécessite pas de transcodage d'adresse puisque, naturellement, le numéro de séquence = 8 ∗ i + j, c'est-à-dire le couple (i,j) codé en binaire est aussi le code binaire du numéro de séquence Le transcodage du balayage en zigzag est avantageusement réalisé par une mémoire morte ROM de 64 mots de bits dont l'adresse d'entrée est le numéro de séquence et la sortie la couple (i,j) où il faut écrire la donnée.

Le contenu de la ROM de transcodage zigzag est présenté en Fig.3.

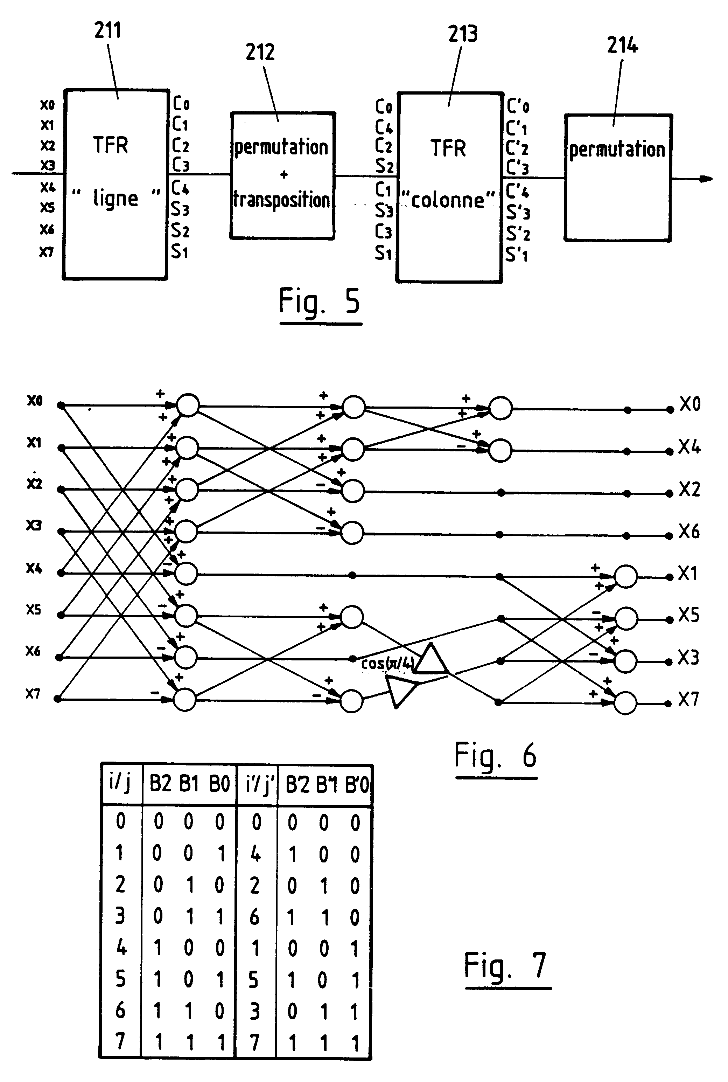

La permutation proprement dite consiste à transformer chacun des indices i et j de ligne et de colonne de la façon schématisée en Fig.4. Cette opération correspond en quelque sorte à un brassage des coefficients, qui symétrise le signal et permet, en quelque sorte, de décorréler les coefficients.

Si i et j sont codés sur 3 bits B2, B1, B0 les nouveaux indices calculés i′ et j′ exprimés sur 3 bits B′2, B′1, B′0 sont tels que

- B′0 : = B0 ⊕ B1
- B′1 : = B0 ⊕ B2
- B′2 : = B0

TFR 8x8 à valeurs réelles : (RVFFT)

Comme schématisé en Fig.5, la transformée de Fourier rapide (en anglais : Fast Fourier Transform ou FFT) à valeurs réelles est réalisée par la mise en oeuvre d'une TFR à valeurs réelles sur chacune des 8 lignes (211), suivies d'une transposition matricielle 8x8 (212) et enfin d'une deuxième série (213) de TFR sur les 8 lignes obtenues après la transposition, avant nouvelle transposition matricielle 8x8 (214).

On notera que dans le mode de réalisation de l'invention consistant à supprimer les étapes de treillis de calcul (22) et de rotation (3), il est également possible de ne pas effectuer l'étape 214 de transposition matricielle, à condition bien entendu d'adapter la matrice de seuils psychovisuels de l'étape de quantification du codage, ainsi que la mise en oeuvre de la transformée inverse du décodage.

La Fig. 6 schématise la logique de réalisation de la TFR monodimensionnelle sous forme de graphe "papillon", permettant d'obtenir à partir des coefficients (x0,...x7) de la ligne source, des coefficients transformés (X0,...X7). Tels que représentés en Fig.6, ces indices (X0,...,X7) sont attribués en intégrant la permutation consécutive à la TFR monodimensionnelle.

Les données résultant de la TFR à valeur réelle sur chacune des lignes doivent être rangées dans l'ordre "bit-reverse" (inversion des bits d'adressage), au lieu de l'ordre naturel. Cette permutation "bit-reverse" intervertit les bits des indices i et j de ligne et de colonne, selon le processus schématisé en Fig.7. Elle n'est pas à confondre avec une permutation réalisée sur les données d'entrée.La combinaison de cette opération de permutation avec la transposition matricielle, dans les étapes 212, 214, ne nécessite pas de transfert-mémoire (et donc du temps), mais simplement une transformation de l'adresse (i,j) en une adresse (i′,j′). Elle est effectuée après chaque série de 8 transformations FFT à valeurs réelles sous la forme de l'opération suivante :

(i',j') : = (bit-reverse (j), bit-reverse (i))

avec

(i,j) adresse avant permutation

(i',j') adresse après permutation.

La permutation bit reverse pourrait également être réalisée en entrée de la TFR monodimensionnelle.

Reconstitution de la TFR-2D à valeurs complexes à partir de la TFR-2D à valeurs réelles :

Les sorties de la FFT-1D à valeurs réelles sont, du fait de la symétrie hermitienne de la transformée Fourier complexe d'un signal réel, des parties réelles (X0, X1, X2, X3, X4) et des parties imaginaires (X5, X6, X7).

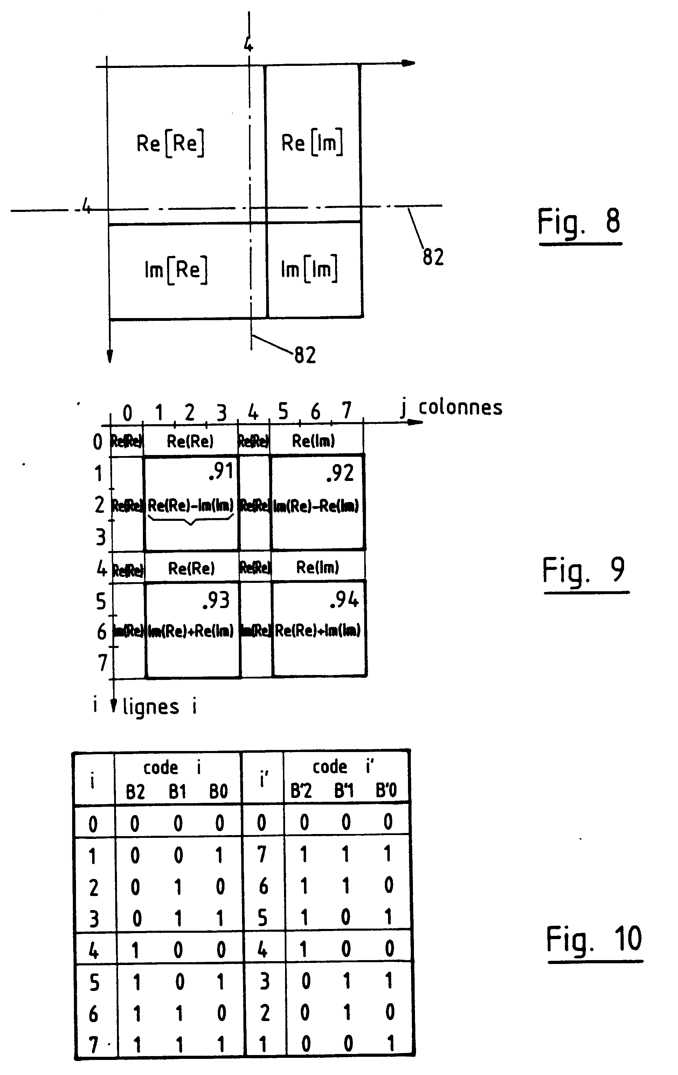

La figure 8 illustre la répartition spatiale, dans la matrice transformée RVFFT, des parties réelles et imaginaires. On note les symétries hermitiennes selon les axes i 81 et j 82.

Les coefficients de la matrice transformée RVFFT sont les données réelles permettant de façon bi-univoque de reconstruire les coefficients de la transformée de Fourier complexe, selon la loi suivante :

$$\text{FFT-2D} = \underbrace{[\text{Re(Re)} - \varepsilon_1 \varepsilon_2 \text{Im(Im)}]}_{\text{Re[FFT-2D]}} + j\underbrace{[\varepsilon_2 \text{Im(Re)} + \varepsilon_1 \text{Re(Im)}]}_{\text{Im[FFT-2D]}}$$

avec:

$\varepsilon_1$ = +/-1 suivant la symétrie hermitienne

$\varepsilon_2$ = +/-1 suivant la symétrie hermitienne

<u>ex</u>: quadrant 1 (91) = $\varepsilon_1$ = $\varepsilon_2$ = +1

Les notations Im[Re] ou Im[Im], Re[Re], Re[Re] sont à interpréter suivant l'exemple suivant :

exemple : Re[Re] = Re[FFT-1D[Re[FFT-1D]]] avec :

* FFT-1D : résultats FFT-1D sur les lignes
* FFT-1D[Re[FFT-1D]] : résultats FFT-1D sur les colonnes

Pour obtenir dans tous les cas les parties réelles et imaginaires de la FFT-2D à valeurs complexes, il suffit de remplacer les termes Re[Re], Re[Im], Im[Re], Im[Im] provenant des deux séries de FFT-1D à valeurs réelles par les valeurs respectives schématisées en Fig. 9, et selon la logique présentée en Table I. Les branchements conditionnels présentés en Table I identifient les éléments de calcul non nuls parmi Re[Re], Im[Re], Re[Im] et Im[Im]. On notera qu'un certain nombre de simplifications peuvent être introduites, notamment du fait que les parties imaginaires sont nulles pour les éléments 0 et 4.

La reconstitution est effectuée en tenant compte de la symétrie hermitienne qui se retrouve dans le cas bi-dimensionnel, et est une symétrie par rapport au couple (N/2,N/2), c'est à dire (4,4) lorsque N = 8. Ceci permet de déduire directement les valeurs complexes de la TFR-2D des 3ème et 4ème quadrants 93,94 de la Fig. 9, à partir de celles des 1er et 2nd quadrants 91,92.

Les calculs des valeurs de la FFT-2D à valeurs complexes à partir des sorties de la FFT-2D à valeurs réelles coûtent en tout 4 x (3x3) additions/soustractions, soit 36 additions/soustractions. Les additions et soustractions se font en prenant les deux mots symétriques par rapport au point (4,4), l'adresse du symétrique s'obtient par le calcul d'adresse schématisé en Fig.10, selon la logique de symétrie suivante : B'0: = B0 et B'1:= B0⊕B1

**TABLE I**

si j = 0,4 alors

Im[FFT-1D (lignes)] = 0

si i = 0,4 alors

Im[FFT-1D (colonnes)] = 0

seul le terme Re[Re] $\neq$ 0

fsi

si i = 1,2,3 alors

Im[FFT-1D (colonnes)] $\neq$ 0

seuls Re[Re] $\neq$ 0 et Im[Re] $\neq$ 0

fsi

fsi

si j = 1,2,3 alors

Im[FFT-1D (lignes)] $\neq$ 0

si i = 0,4 alors

Im[FFT-1D (colonnes)] = 0

seuls les termes Re[Re] $\neq$ 0 et Re[Im] $\neq$ 0

fsi

si i = 1,2,3 alors

tous les termes Re[Re] $\neq$ 0, Re[Im] $\neq$ 0

Im[Re] $\neq$ 0, Im[Im] $\neq$ 0

fsi

fsi

Rotations finales de reconstitution de la TCD :

Les valeurs de la DCT 8x8 sont déduites de la FFT 8x8 à valeurs complexes par l'équation matricielle suivante :

$$
\underbrace{\begin{bmatrix} DCT(i,j) \\ DCT(8-i,j) \\ DCT(i,8-j) \\ DCT(8-i,8-j) \end{bmatrix}}_{\substack{\text{sorties} \\ \text{DCT 8x8}}} = \underbrace{\begin{bmatrix} +1 & 0 & +1 & 0 \\ 0 & +1 & 0 & +1 \\ 0 & +1 & 0 & -1 \\ -1 & 0 & +1 & 0 \end{bmatrix}}_{\substack{\text{treillis} \\ \text{après rotation}}} \cdot \underbrace{\begin{bmatrix} c_k & -s_k & 0 & 0 \\ s_k & c_k & 0 & 0 \\ 0 & 0 & c_k & -s_k \\ 0 & 0 & s_k & c_k \end{bmatrix}}_{\text{2 rotations}} \cdot \underbrace{\begin{bmatrix} Re(FFT\text{-}2D(i,j)) \\ Im(FFT\text{-}2D(i,j)) \\ Re(FFT\text{-}2D(i,8-j)) \\ Im(FFT\text{-}2D(i,8-j)) \end{bmatrix}}_{\substack{\text{sortiesFFT-2D 8x8} \\ \text{à valeurs complexes}}}
$$

où ck = cos(kπ/16) et sk = sin (kπ/16)

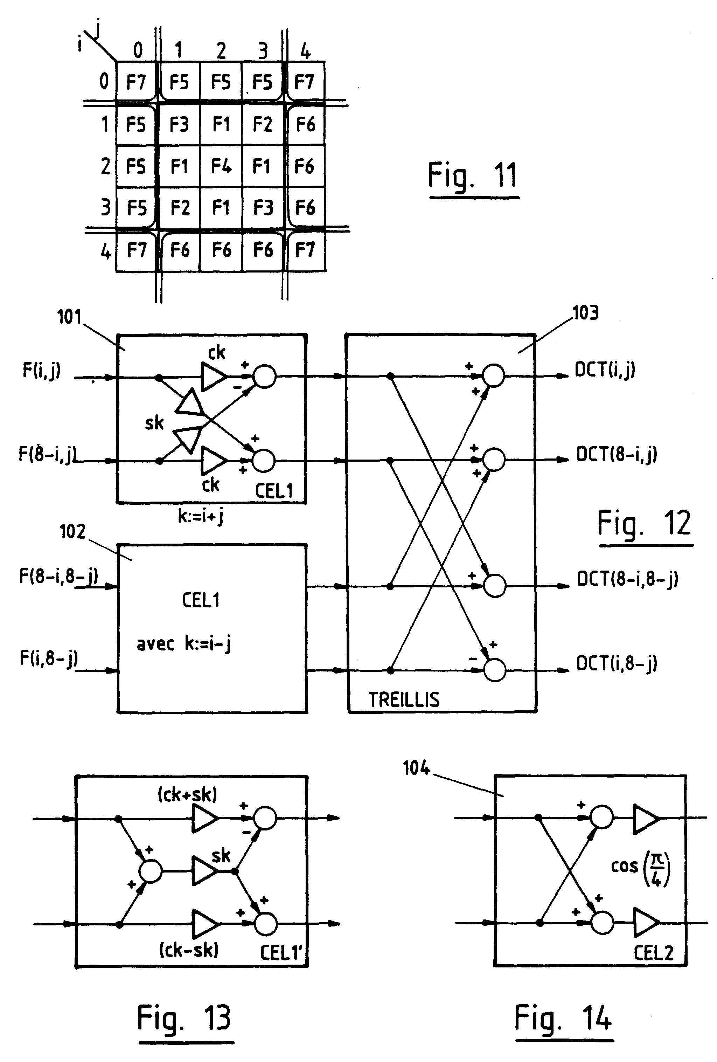

Les valeurs particulières des sk et ck amènent des simplifications dans la réalisation des rotations et l'équation matricielle décrite ci-dessus peut donc se mettre sous sept formes différentes appelées "familles". Les sept familles sont localisées dans la matrice FFT complexe comme représentée en Fig 11.

Les figures 12 à 17 sont des graphes illustrant certains aspects des modes de mise en oeuvre des rotations, pour chacune des sept familles F1, F2,..F7.

Famille F1

C'est la rotation la plus générale, car sans simplification aucune. On pose sk: = $\sin(k\pi/16)$ et ck: = $\cos(k\pi/16)$. Le graphe de la Fig.12 présente une mise en oeuvre avec trois cellules : 1O1, 102, 103. La cellule 102 est identique à la cellule 101, mais pour une valeur du coëfficient k différente (k=i+j, et k=i-j respectivement pour les cellules 101 et 102). A partir du couple (i,j), il faut utiliser la symétrie par rapport à 4 pour obtenir 8-i/8-j

$$(i, j) = (i,j)$$

$$(sym4(i), j) = (8\text{-}i,j)$$

$$(Sym4(i), sym4(j)) = (8\text{-}i,8\text{-}j)$$

$$(i, sym4(j)) = (i,8\text{-}j)$$

La famille F1 est réalisée pour les couples (1,2) , (2,1) , (2,3) , (3,2) suivant le tableau :

| (i,j) | k=i+j | sk | ck | k=i-j | sk | ck |
|---|---|---|---|---|---|---|
| (1,2) | 3 | $\sin3\pi/16$ | $\cos3\pi/16$ | -1 | $-\sin\pi/16$ | $\cos\pi/16$ |
| (2,1) | 3 | $\sin3\pi/16$ | $\cos3\pi/16$ | +1 | $\sin\pi/16$ | $\cos\pi/16$ |
| (2,3) | 5 | $\sin5\pi/16$ | $\cos5\pi/16$ | -1 | $-\sin\pi/16$ | $\cos\pi/16$ |
| (3,2) | 5 | $\sin5\pi/16$ | $\cos5\pi/16$ | +1 | $\sin\pi/16$ | $\cos\pi/16$ |

La famille F1 utilise les valeurs $\sin(3\pi/16)$, $\sin(\pi/16)$, $\cos(\pi/16)$, $\cos(3\pi/16)$, $\sin(5\pi/16)$, $\cos(5\pi/16)$. Afin de minimiser le nombre des multiplications la cellule CEL1 peut être modifiée et représentée en FiG. 13. La version de la Fig. 13 ne nécessite que trois multiplications et trois additions au lieu de quatre multiplications et deux additions pour la version de la Fig. 12.

Pour les autres familles, il serait possible d'utiliser la même rotation générale que celle qui vient d'être décrite pour la famille F1. Toutefois, ceci permettrait d'augmenter la régularité de l'algorithme en utilisant la même cellule de rotation, au prix d'un temps de calcul légèrement plus important.

Famille F2:

Cette rotation est réalisée pour les couples (i,j) $\in$ {(1,3),(3,1)}. Son graphe est représenté en mettant en oeuvre la cellule 104 de la figure 14, à la place de la cellule 101 de la Fig. 12.

La famille F2 utilise les valeurs $\sin(\pi/8)$ et $\cos(\pi/8)$ ainsi que $\cos(\pi/4)$, suivant le tableau

| (i,j) | k=i-j | sk | ck |
|---|---|---|---|
| (1,3) | -2 | $-\sin(\pi/8)$ | $\cos(\pi/8)$ |
| (3,1) | +2 | $\sin(\pi/8)$ | $\cos(\pi/8)$ |

Famille F3:

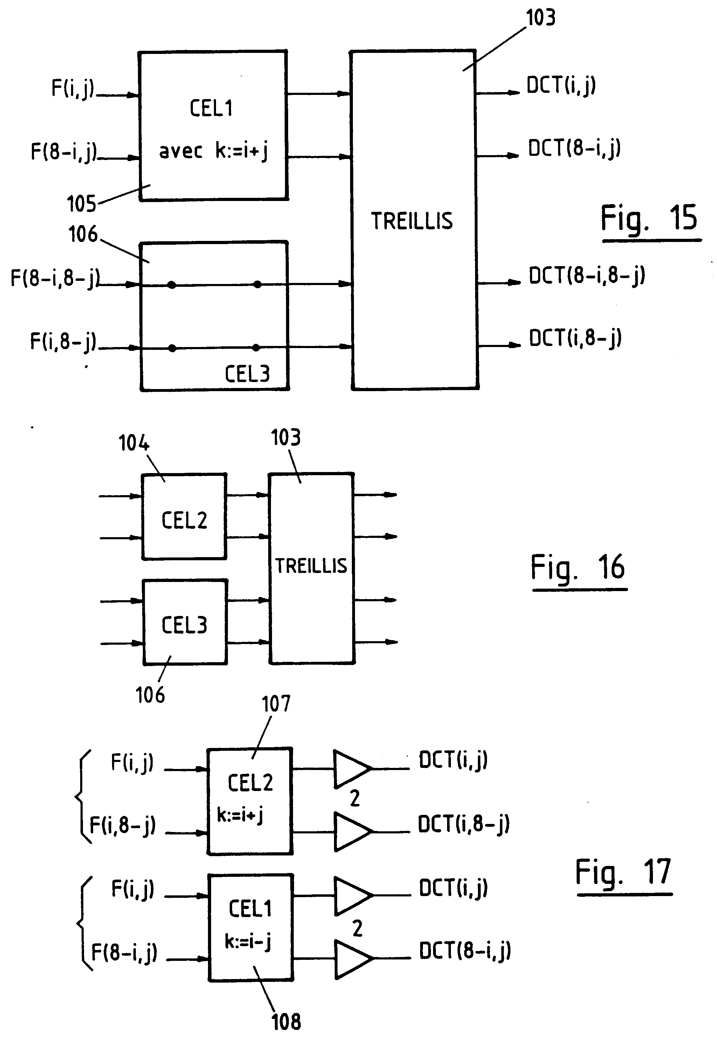

Cette rotation est réalisée pour les couples $(i,j) \in \{(1,1), (3,3)\}$. Comme représenté en Fig.15, la cellule 105 est identique aux cellules 101,102 de la Fig.12 (et le cas échéant à la cellule équivalente de la Fig.13). La cellule 106 est constituée de deux lignes dépourvues de tout traitement spécifique. La famille F3 utilise les valeurs $\sin(\pi/8)$, $\sin(3\pi/8)$, $\cos(\pi/8)$, $\cos(3\pi/8)$ selon le tableau

| (i,j) | k: = i+j | sk | ck |
|---|---|---|---|
| (1,1) | 2 | $\sin(\pi/8)$ | $\cos(\pi/8)$ |
| (3,3) | 6 | $\sin(3\pi/8)$ | $\cos(3\pi/8)$ |

Famille F4:

Dans cette famille, la rotation est réalisée pour le couple $(i,j) = (2,2)$, selon le graphe de la Fig. 16. Les cellules d'alimentation du treillis 103 sont les cellules 104 et 106 des Fig. 14 et 15 respectivement. La famille F4 utilise seulement la valeur $\cos(\pi/4)$.

Familles F5 et F6:

Pour la famille F5, la rotation consiste à effectuer des multiplications par 2 à la place du treillis de calcul 103 (Fig.17). Les cellules 107,108 sont identiques à celles 101,102 des Fig. 12 et 13.
La famille F5 correspond aux couples (i,j) tels que
i = 0 et j = 1,2,3
j = 0 et i = 1,2,3
et s'effectue suivant le tableau

| (i,j) | k:i+j | sk | ck | k:=i-j | sk | ck |
|---|---|---|---|---|---|---|
| (0,1) | 1 | $\sin(\pi/16)$ | $\cos(\pi/16)$ | -1 | $-\sin(\pi/16)$ | $\cos(\pi/16)$ |
| (0,2) | 2 | $\sin(\pi/8)$ | $\cos(\pi/8)$ | -2 | $-\sin(\pi/8)$ | $\cos(\pi/8)$ |
| (0,3) | 3 | $\sin(3\pi/16)$ | $\cos(2\pi/16)$ | -3 | $-\sin(3\pi/16)$ | $\cos(3\pi/16)$ |
| (1,0) | 1 | $\sin(\pi/16)$ | $\cos(\pi/16)$ | 1 | $\sin(\pi/16)$ | $\cos(\pi/16)$ |
| (2,0) | 2 | $\sin(\pi/8)$ | $\cos(\pi/8)$ | 2 | $\sin(\pi/8)$ | $\cos(\pi/8)$ |
| (3,0) | 3 | $\sin(3\pi/16)$ | $\cos(3\pi/16)$ | 3 | $\sin(3\pi/16)$ | $\cos(3\pi/16)$ |

Pour la famille F6, la rotation se limite aux cellules 107 et 108 de la Fig. 17, sans mise en oeuvre des multiplications par 2.

11

La famille F6 comprend les couples (i,j) tels que :
i = 4 et j = 1,2,3 ; j = 4 et i = 1,2,3 et s'effectue suivant le tableau

| (i,j) | k:=i+j | sk | ck | k:=i-j | sk | ck |
|-------|--------|----|----|--------|----|----|
| (1,4) | 5 | $\sin(5\pi/16)$ | $\cos(5\pi/16)$ | -3 | $-\sin(3\pi/16)$ | $\cos(3\pi/16)$ |
| (2,4) | 6 | $\sin(3\pi/8)$ | $\cos(3\pi/8)$ | -2 | $-\sin(\pi/8)$ | $\cos(\pi/8)$ |
| (3,4) | 7 | $\sin(7\pi/16)$ | $\cos(7\pi/16)$ | -1 | $-\sin(\pi/16)$ | $\cos(\pi/16)$ |
| (4,1) | 5 | $\sin(5\pi/16)$ | $\cos(5\pi/16)$ | 3 | $\sin(3\pi/16)$ | $\cos(3\pi/16)$ |
| (4,2) | 6 | $\sin(3\pi/8)$ | $\cos(3\pi/8)$ | 2 | $\sin(\pi/8)$ | $\cos(\pi/8)$ |
| (4,3) | 7 | $\sin(7\pi/16)$ | $\cos(7\pi/16)$ | 1 | $\sin(\pi/16)$ | $\cos(\pi/16)$ |

<u>Famille 7</u>:

La famille F7 est composée des rotations réduites au minimum

$$DCT(0,0) = 2\, F(0,0)$$

$$DCT(0,4) = 2\cos(\pi/4)\, F(0,4)$$

$$DCT(4,0) = 2\cos(\pi/4)\, F(4,0)$$

$$DCT(4,4) = 2\, F(4,4)$$

Dans la description qui vient d'être présentée de la totalité des étapes du procédé de l'invention de mise en oeuvre d'une transformée de la DCT, il apparaît très clairement que la charge de calcul se situe principalement au niveau des rotations

Par ailleurs, la permutation tend à symétriser les données d'entrée. La partie imaginaire des coefficients de la FFT à valeurs réelles va ainsi tendre vers "0" lorsque la corrélation entre les données d'entrée va croître. Or, dans certaines applications pratiques comme le codage d'images à débit réduit, les signaux d'entrée sont en général fortement corrélés.

Les rotations vont donc s'appliquer à des nombres complexes dont la partie réelle est prédominante et ne devraient donc pas modifier l'entropie du signal à coder. La suppression de ces rotations introduit ainsi une nouvelle transformée utilisable en codage d'images.

Concrètement, cette étape consiste à annuler sélectivement au moins certains, voire tous les coefficients correspondant aux parties imaginaires des coefficients complexes, à chaque TFR monodimensionnelle dans les étapes 211 et 213. Le critère d'annulation sélectif peut être un seuillage. L'annulation d'un coefficient se traduit par exemple par la non exécution des opérations d'addition et/ou de soustraction correspondantes (voir Fig.6).

De plus, les signaux d'images à coder étant réels, (hypothèse de base permettant d'introduire la transformée de Fourier à valeurs réelles dans le calcul de la DCT), le spectre de la transformée de Fourier est à symétrie hermitienne. Il est alors possible de prendre comme autre transformée, la transformée de Fourier à valeurs réelles du signal permuté. Cette transformée présente une complexité arithmétique très réduite puisque, pour une dimension 8x8, elle se réalise en 32 multiplications et 320 additions soit un nombre de multiplications divisé par 3,5 et un nombre d'additions divisé par 1,5.

Par ailleurs, ses performances en compression sont tout à fait comparables à celles de la Transformée en cosinus.

A titre comparatif, les performances en terme de nombre d'additions et de multiplications impliquées par les procédés CHEN, LEE et VETTERLI d'une part, et les deux variantes de l'invention (avec, puis sans rotations) d'autre part, sont présentées en table II, en fonction de la taille des blocs d'image (N = 8 à 64).

TABLE II

| N | CHEN & AL ligne/ colonne | | B.G LEE ligne/ colonne | | FFTC ligne/colonne | | Invention avec rotations | | Sans rotations | |
|---|------|------|------|------|------|------|------|------|------|------|
| | mult | add | mult | add | mult | add | mult | add | mult | add |
| 8 | 256 | 416 | 192 | 464 | 192 | 464 | 112 | 470 | 32 | 320 |
| 16 | 1408 | 2368 | 1024 | 2592 | 1024 | 2592 | 672 | 2662 | 320 | 1920 |
| 32 | 7424 | 12416 | 5120 | 13376 | 5120 | 13376 | 3648 | 13766 | 2176 | 10496 |
| 64 | 37376 | 61696 | 24576 | 65664 | 24576 | 65664 | 18560 | 67462 | 12544 | 53760 |

Dans le cas d'une suppression de l'étape de treillis de calcul, le nombre d'additions est diminué de la valeur 4 x $(N/2 - 1)^2$, soit par exemple 36 additions supprimées pour N = 8. Le nombre de multiplications reste inchangé.

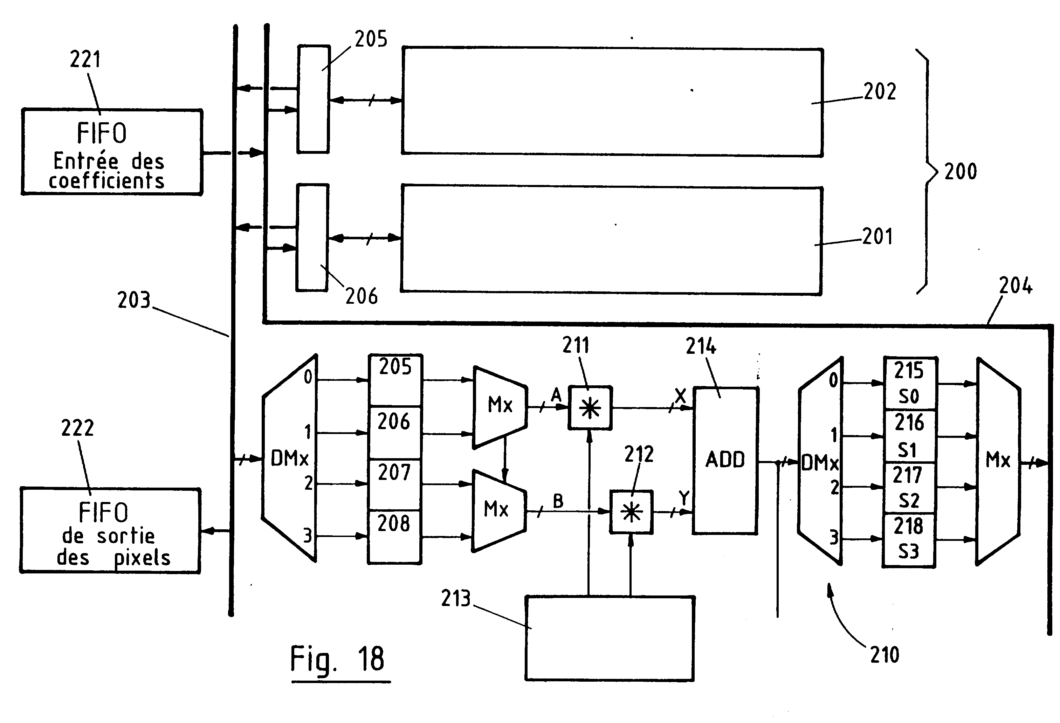

La figure 18 représente un circuit avantageux permettant de mettre en oeuvre le procédé de l'invention.

Comme représenté en Fig. 18, l'opérateur DCT est composé d'une mémoire de travail 200 de 64 mots, correspondants aux 64 éléments d'une matrice de 8 lignes et 8 colonnes, et d'un "chemin de données" 210 effectuant des additions et des multiplications à partir des données lues en mémoire. Les calculs étant soigneusement ordonnés, les résultats des calculs du "chemin de données" sont écrits aux mêmes adresses que celles de lecture, en mémoire de travail 200. On peut dire que l'on fait "tourner" les données entre la mémoire 200 et le chemin de données 210, jusqu'à obtention du résultat final. Les données sont introduites et extraites de l'opérateur DCT à travers des FIFO d'entrée 221 et de sortie 222.

Etant donné le nombre important d'opérations élémentaires de type "papillon" à effectuer [réalisant par exemple (X0 + X4) et (X0 - X4)], la mémoire est divisée en deux parties égales 201,202 appelées MA et MB. MA stocke les lignes paires du bloc 8x8 tandis que MB stocke les lignes impaires. De plus, afin d'accéder simultanément à ces deux mémoires 201,202, soit en lecture, soit en écriture, MA et MB sont connectées à deux bus 203,204, à travers des registres 205,206, l'un 203 des bus servant systématiquement lors des lectures, l'autre bus 204 pour les écritures en mémoire.

Les mémoires MA 201 et MB 202 sont avantageusement des RAM de 32 mots de 20 bits.

Le chemin de données est principalement constitué :

- de quatre registres A0, A1, A2, A3 (205,206,207,208), stockant les données lues en mémoire (200,201,202),
- de deux multiplicateurs (211,212) par les valeurs "cosinus", "sinus" et constantes diverses (0, +1, -1,...) issues d'une table en mémoire morte 213. Cette mémoire 213 est une ROM de 16 mots de 12 bits contenant les tables sinus et cosinus des angles de 0 à $\pi/2$ au pas de $\pi/16$,
- d'un additionneur 214,
- et de quatre registres de sortie S0, S1, S2, S3 (215,216,217,218), stockant les résultats en sortie de l'additionneur 214.

Ils présentent également des modules multiplexeurs Mx et démultiplexeurs DMx

Les commandes de la mémoire 200 et du "chemin de données" 210 sont générées de telle sorte que la mémoire et le "chemin de données" soient utilisés à 100 % du temps pendant tout l'algorithme de calcul de la DCT. Pour cela, la partition de la mémoire MA et MB, les quatre registres A d'entrée et les quatre registres B du "chemin de données" travaillent en pipeline suivant un entrelacement 4-4 ou 1-1, selon que les données à traiter proviennent ou non d'une même ligne.

Le fonctionnement en pipeline de l'opérateur DCT est basé sur le partitionnement de la mémoire de données de 64 mots (correspondant aux éléments B(i,j) d'un bloc B de taille 8x8, i = 0,...,7, j = 0,...,7), en deux mémoires MA et MB, MA contenant les lignes paires, i = 0,2,4,6 et MB contenant les lignes impaires i = 1,3,5,7, ceci permettant, soit de lire en mémoire MA 201 et d'écrire en parallèle en mémoire MB, soit de lire en mémoire MB 202 et d'écrire en parallèle en mémoire MA. On divise ainsi par 2 le temps d'accès apparent de la mémoire.

Les opérateurs élémentaires sont :

- soit un papillon qui à partir de deux éléments A0 et A1 génère (A0 + A1) et (A0 - A1),
- soit des couples de multiplications simples qui à partir de deux éléments A0, A1 génère $\alpha$ x A0 et $\beta$ x A1,
- soit des rotations d'angle $\Theta$ qui à partir de deux éléments A0 et A1 génère (A0.cos($\Theta$)-A1.sin($\Theta$)) et (A0.Sin($\Theta$) + A1.cos($\Theta$) (cf cellule 101 figure 12)

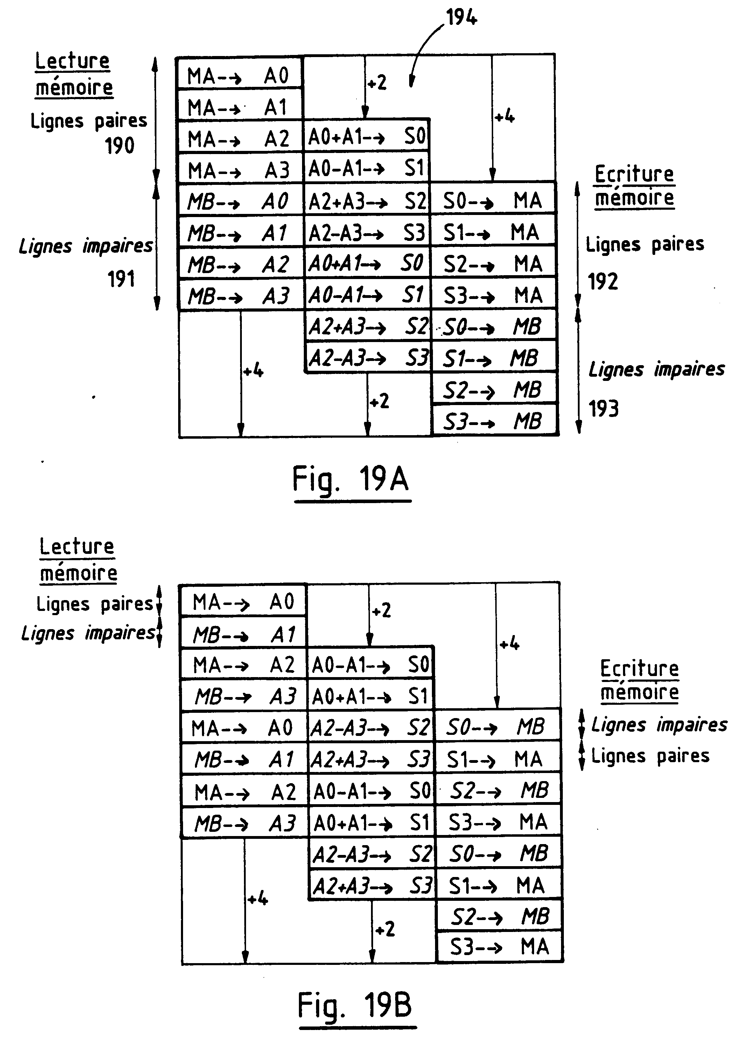

Ceci est plus clairement explicité en figures 19A, 19B.

En figures 19A et 19B, les colonnes de gauche des tableaux représentent les lectures successives en mémoires MA et MB, les colonnes centrales les opérations de calcul (additions, soustractions, multiplications) sur le contenu des registres, et les colonnes de droite, les écritures successives en mémoires MA, MB.

Le fonctionnement représenté en figure 19A correspond au cas où toutes les données proviennent d'une même mémoire. Ceci correspond aux cas où les opérandes des opérations d'addition et de multiplication à effectuer proviennent d'une même ligne, puisque les mémoires MA 201 et MB 202 correspondent respectivement au stockage des coefficients des lignes paires et des lignes impaires. La seule combinaison possible, permettant un fonctionnement en pipeline, consiste à lire successivement quatre coefficients provenant de la mémoire MA 201 (étape 190), pour les placer en registres A0,A1,A2,A3 (205 à 208), puis quatre coefficients en mémoire MB 202 (étape 191), et ainsi de suite alternativement. Ce regroupement des lectures par quatre, permet ensuite d'effectuer, en alternance, dans chaque mémoire MA 201 et MB 202 les écritures des contenus des registres de sortie S0,S1,S2,S3(215 à 218), des étapes 192 et 193 de la figure 19A. Le contenu des registres S0,S1,S2,S3 est réalisé par application 194 des opérateurs élémentaires détaillés plus haut sur le contenu des registres A0,A1,A2,A3. Le fonctionnement en pipeline permet ainsi d'utiliser chaque mémoire MA et MB à 100 % du temps.

Dans le cas schématisé en figure 19B, les opérandes des opérations d'addition ou de soustraction proviennent l'un d'une ligne paire et l'autre d'une ligne impaire. Dans ce cas, l'entrelacement, pour la lecture des mémoires MA 201 et MB 202 est un entrelacement 1-1. La signification des symboles utilisés en figure 19B correspond aux symboles de la figure 19A.

Dans un autre mode de réalisation avantageux, les données peuvent être réparties dans deux mémoires MA et MB, sous forme de deux damiers complémentaires. Dans ce cas, chaque mémoire comprend, pour chaque ligne, un coefficient sur deux. Cette répartition permet également d'optimiser l'utilisation de chacune des mémoires.

On notera enfin que les opérations selon l'entrelacement "1-1" (figure 19B) peuvent être enchaînées en pipeline, sans perte de temps, avec les opérations selon l'entrelacement "4-4" (figure 19A).

## Revendications

1.  Procédé de compression de données représentatives d'un signal d'images, du type consistant à décomposer l'image en blocs, chaque bloc formant une matrice de pixels, à effectuer une opération mathématique de transformation sur chaque matrice de pixels selon une loi de transformation permettant d'obtenir une matrice résultante d'éléments représentatifs de l'activité de l'image, et à éliminer dans chaque matrice résultante les éléments de faible pertinence psychovisuelle par seuillage par rapport à une matrice de seuils de référence,
    procédé caractérisé en ce que ladite opération mathématique de transformation comprend, pour chacune desdites matrices de pixels :

    une étape de transposition des éléments de la matrice de pixels par permutation, comprenant :

      une étape de brassage des pixels de chacune des lignes de ladite matrice,
      une étape de brassage des pixels de chacune des colonnes de ladite matrice,

    lesdits brassages étant effectués de façon à décorréler lesdits pixels, et
    une étape d'application d'une Transformée de Fourier Rapide (TFR) sur la matrice permutée.

2.  Procédé selon la revendication 1, caractérisé en ce que ladite étape d'application d'une Transformée de Fourier Rapide est réalisée en appliquant à la matrice de pixels transposée un enchaînement de deux jeux de TFR monodimensionnelles à valeurs réelles, portant successivement sur chacune des lignes de la matrice de pixels permutée, puis sur chacune des colonnes de la matrice intermédiaire résultant du premier jeu de TFR monodimensionnelles.

3.  Procédé selon l'une quelconque des revendications 1 et 2, caractérisé en ce qu'au moins une des deux TFR monodimensionnelles est suivie d'une opération de transposition matricielle avec inversion de bit ("bit-reverse").

4.  Procédé selon l'une quelconque des revendications 1 à 3, caractérisé en ce qu'on effectue sur la matrice transformée résultant des deux TFR monodimensionnelles enchaînées, un treillis de calculs destinés à reconstituer la matrice transformée par TFR à valeurs complexes correspondant à la dite matrice de pixels transposée initiale.

5.  Procédé selon la revendication 4 caractérisé en ce que la dite matrice transformée par TFR à valeurs complexes est soumise à un traitement de rotations, de façon à obtenir une matrice résultante correspondant à la transformée TCD à valeurs réelles de la matrice de pixels initiale.

6.  Procédé selon l'une quelconque des revendications 1 à 5 caractérisé en ce qu'on annule au moins une partie des coefficients imaginaires obtenus après au moins l'un des deux jeux de TFR monodimensionnelles à valeurs réelles.

7.  Procédé selon la revendication 1, caractérisé en ce que ladite étape d'application d'une Transformée de Fourier Rapide est réalisée en appliquant à la matrice de pixels transposée une unique TFR bidimensionnelles.

8.  Procédé selon l'une quelconque des revendications 1 à 7 caractérisé en ce que la loi de permutation des indices des éléments de la matrice de pixels est combinée à un balayage ligne à ligne de la matrice.

9.  Application du procédé selon l'une quelconque des revendications 1 à 8 pour la compression d'image appartenant à une séquence d'images à débit réduit.

10. Application du procédé selon l'une quelconque des revendications 1 à 8 pour le codage de blocs d'images de taille 8x8 et 16x16 pixels.

11. Dispositif de mise en oeuvre du procédé selon l'une quelconque des revendications 1 à 8 caractérisé en ce qu'il comprend notamment :

   -   deux unités de mémoire distinctes (201,202), contenant respectivement les coefficients des lignes paires et des lignes impaires des matrices,
   -   des moyens de permutation des indices de ligne et de colonne de matrice associés aux coefficients contenus dans les unités de mémoire,
   -   un chemin de données (210) effectuant en pipeline les opérations de lecture entrelacées des coefficients dans les unités de mémoires (201,202), les opérations de calcul sur lesdits coefficients, et les opérations d'écriture entrelacées des coefficients résultants dans les unités de mémoire (201,202),

   lesdits moyens de permutation des indices mettant en oeuvre une étape de transposition des éléments de la matrice de pixels par permutation, comprenant une étape de brassage des pixels de chacune des lignes de ladite matrice, et une étape de brassage des pixels de chacune des colonnes de ladite matrice, lesdits brassages étant effectués de façon à décorréler lesdits pixels, lesdites unités de mémoires (201,202) coopérant avec ledit chemin de données (210) de façon à effectuer au moins les étapes suivant ladite étape de transposition et une étape d'application d'une Transformée de Fourier Rapide (TFR) sur la matrice permutée, par passages successifs des coefficients dans ledit chemin de données (210).

## Patentansprüche

1.  Kompressionsverfahren für repräsentative Daten eines Bildsignals, von der Art, die darin besteht, das Bild in Blöcke zu zerlegen, wobei jeder Block eine Pixelmatrix bildet, dann jede Pixelmatrix einer mathematischen Transformation gemäß eines Transformationsgesetzes zu unterwerfen, welche als Ergebnis eine Matrix von Elementen liefert, die für die Bildaktivität repräsentativ sind, und in jeder sich ergebenden Matrix die Elemente schwacher psychovisueller Bedeutung zu eliminieren, durch Bildung eines Schwellenwertes mittels einer Matrix von Referenzschwellenwerten,
   dadurch gekennzeichnet, daß die mathematische Transformation für jede Pixelmatrix folgendes umfaßt:

   -   einen Schritt zur Transposition der Elemente der Pixelmatrix durch Permutation, welcher folgendes umfaßt:

       .   einen Schritt zur Durchmischung der Pixel einer jeden Zeile der Matrix,
       .   einen Schritt zur Durchmischung der Pixel einer jeden Spalte der Matrix,

       wobei die Durchmischungen derart durchgeführt werden, daß sie die Pixel dekorrelieren, und
   -   einen Schritt zur Anwendung einer schnellen Fourier-Transformierten (TFR) auf die permutierte Matrix.

2.  Verfahren gemäß Anspruch 1,
   dadurch gekennzeichnet, daß der Schritt zur Anwendung einer schnellen Fourier-Transformierten dadurch verwirklicht wird, daß auf die Matrix der transponierten Pixel eine Verkettung zweier Sätze monodimensionaler TFR mit reellen Werten angewandt wird, die nacheinander jede Zeile der Matrix der permutierten Pixel und dann jede Spalte der Zwischenmatrix, die sich aus dem ersten Satz monodimensionaler TFR ergibt, betrifft.

3. Verfahren gemäß einem der Ansprüche 1 oder 2,
dadurch gekennzeichnet, daß mindestens eine der monondimensionalen TFR von einer Matrixtransposition mit Bitumkehrung ("bit-reverse") gefolgt wird.

4. Verfahren gemäß einem der Ansprüche 1 bis 3,
dadurch gekennzeichnet, daß man die transformierte Matrix, die sich aus den zwei verketteten monodimensionalen TFR ergibt, einem Berechnungsgitter unterwirft, welches die durch TFR mit komplexen Werten transformierte Matrix wiederherstellen soll, die der ursprünglichen Matrix transponierter Pixel entspricht.

5. Verfahren gemäß Anspruch 4,
dadurch gekennzeichnet, daß die durch TFR mit komplexen Werten transformierte Matrix einer Rotationsbehandlung unterworfen wird, um eine resultierende Matrix zu erhalten, die der TCD-Transformierten mit reellen Werten der ursprünglichen Pixelmatrix entspricht.

6. Verfahren gemäß einem der Ansprüche 1 bis 5,
dadurch gekennzeichnet, daß man mindestens einen Teil der imaginären Koeffizienten annulliert, die sich nach mindestens einem der zwei Sätze monodimensionaler TFR mit reellen Werten ergeben.

7. Verfahren gemäß Anspruch 1,
dadurch gekennzeichnet, daß der Anwendungsschritt einer schnellen Fourier-Transformierten durch Anwendung einer einzigen bidimensionalen TFR auf die Matrix transponierter Pixel angewandt wird.

8. Verfahren gemäß einem der Ansprüche 1 bis 7,
dadurch gekennzeichnet, daß das Permutationsgesetz der Indizes der Elemente der Pixelmatrix mit einer zeilenweisen Abtastung der Matrix kombiniert wird.

9. Anwendung des Verfahrens gemäß einem der Ansprüche 1 bis 8 für die Kompression von Bildern, die einer Bildfolge mit reduziertem Durchsatz angehören.

10. Anwendung des Verfahrens gemäß einem der Ansprüche 1 bis 8 für die Kodierung der Bildblöcke der Größe 8x8 und 16x16 Pixel.

11. Vorrichtung zur Anwendung des Verfahrens gemäß einem der Ansprüche 1 bis 8,
dadurch gekennzeichnet, daß sie insbesondere folgendes umfaßt:

- zwei verschiedene Speichereinheiten (201, 202), die jeweils die Koeffizienten der geraden und der ungeraden Zeilen der Matrix enthalten,
- Mittel zur Permutation der Zeilen- und der Spaltenindizes der Matrix, welche mit den Koeffizienten assoziiert sind, die in den Speichereinheiten enthalten sind,
- einen Datenpfad (210), der nach Art einer Pipeline die verschachtelten Lesevorgänge für die Koeffizienten in den Speichereinheiten (210, 202), die Berechnungen an diesen Koeffizienten und zuletzt die verschachtelten Schreibvorgänge der sich ergebenden Koeffizienten in den Speichereinheiten (201, 202) ausführt,

wobei die Mittel zur Permutation der Indizes einen Transpositionsschritt der Elemente der Pixelmatrix durch Permutation bewirken, welche einen Durchmischungsschritt der Pixel einer jeden Zeile der Matrix und einen Durchmischungsschritt der Pixel einer jeden Spalte der Matrix umfassen, wobei diese Durchmischungen derart erfolgen, daß sie die Pixel dekorrelieren und wobei die Speichereinheiten (201, 202) mit dem Datenpfad (210) derart zusammenarbeiten, daß mindestens die Schritte ausgeführt werden, die dem Transpositionsschritt folgen und ein Schritt zur Anwendung einer schnellen Fourier-Transformierten (TFR) ausgeführt wird, durch sukzessive Durchgänge der Koeffizienten durch den Datenpfad (210).

## Claims

1. Method for compressing data representative of a signal from images, of the type consisting in decomposing the image into blocks, each block forming a matrix of pixels, in performing a mathematical transformation operation on each matrix of pixels according to a law of transformation making it possible to obtain a resulting matrix of elements representative of the activity of the image, and in eliminating the elements of little psychovisual relevance from each resulting matrix by thresholding in relation to a matrix of reference thresholds, which method is characterized in that the said mathematical transformation operation comprises, for each of the said matrices of pixels:
   a step of transposing the elements of the matrix of pixels by permutation, comprising:

   a step of shuffling the pixels of each of the rows of the said matrix,
   a step of shuffling the pixels of each of the columns of the said matrix,

   the said shufflings being performed in such a way as to decorrelate the said pixels, and
   a step of applying a Fast Fourier Transform (FFT) to the permuted matrix.

2. Method according to Claim 1, characterized in that the said step of applying a Fast Fourier Transform is carried out by applying to the transposed matrix of pixels a chaining of two sets of real-valued one-dimensional FFTs, pertaining successively to each of the rows of the permuted matrix of pixels, then to each of the columns of the intermediate matrix resulting from the first set of one-dimensional FFTs.

3. Method according to either one of Claims 1 and 2, characterized in that at least one of the two one-dimensional FFTs is followed by an operation of matrix transposition with bit reversal.

4. Method according to any one of Claims 1 to 3, characterized in that on the transformed matrix resulting from the two chained one-dimensional FFTs is performed a trellis of calculations which are intended to reconstruct the complex-valued FFT-transformed matrix corresponding to the said initial transposed matrix of pixels.

5. Method according to Claim 4, characterized in that the said complex-valued FFT-transformed matrix is subjected to a processing of rotations, so as to obtain a resulting matrix corresponding to the real-valued DCT transform of the initial matrix of pixels.

6. Method according to any one of Claims 1 to 5, characterized in that at least some of the imaginary coefficients obtained after at least one of the two sets of real-valued one-dimensional FFTs are zeroed.

7. Method according to Claim 1, characterized in that the said step of applying a Fast Fourier Transform is carried out by applying a single two-dimensional FFT to the transposed matrix of pixels.

8. Method according to any one of Claims 1 to 7, characterized in that the law for permuting the indices of the elements of the matrix of the pixels is combined with a row-by-row scan of the matrix.

9. Application of the method according to any one of Claims 1 to 8 for the compression of an image belonging to a sequence of images at reduced bit rate.

10. Application of the method according to any one of Claims 1 to 8 for the coding of blocks of images of size 8 x 8 and 16 x 16 pixels.

11. Apparatus for implementing the method according to any one of Claims 1 to 8, characterized in that it comprises, in particular:

    - two distinct memory units (201, 202), respectively containing the coefficients of the even rows and of the odd rows of the matrices,
    - means of permuting the matrix row and column indices associated with the coefficients contained in the memory units,
    - a data path (210) pipelining the interlaced operations of reading the coefficients from the memory units (201, 202), the calculation operations on the said coefficients, and the interlaced operations of writing the resulting coefficients to the memory units (201, 202),

the said means of permuting the indices implementing a step of transposition of the elements of the matrix of pixels by permutation, comprising a step of shuffling the pixels of each of the rows of the said matrix, and a step of shuffling the pixels of each of the columns of the said matrix, the said shufflings being performed so as to decorrelate the said pixels, the said memory units (201, 202) cooperating with the said data path (210) so as to perform at least the steps following the said step of transposition and a step of applying a Fast Fourier Transform (FFT) to the permuted matrix, by successive transfers of the coefficients to the said data path (210).

## Balayage zig-zag

| i\\j | 0 | 1 | 2 | 3 | 4 | 5 | 6 | 7 |
|---|---|---|---|---|---|---|---|---|
| 0 | 0 | 1 | 5 | 6 | 14 | 15 | 27 | 28 |
| 1 | 2 | 4 | 7 | 13 | 16 | 26 | 29 | 42 |
| 2 | 3 | 8 | 12 | 17 | 25 | 30 | 41 | 43 |
| 3 | 9 | 11 | 18 | 24 | 31 | 40 | 44 | 53 |
| 4 | 10 | 19 | 23 | 32 | 39 | 45 | 52 | 54 |
| 5 | 20 | 22 | 33 | 38 | 46 | 51 | 55 | 60 |
| 6 | 21 | 34 | 37 | 47 | 50 | 56 | 59 | 61 |
| 7 | 35 | 36 | 48 | 49 | 57 | 58 | 62 | 63 |

## Fig. 2

## Balayage télévision

| i\\j | 0 | 1 | 2 | 3 | 4 | 5 | 6 | 7 |
|---|---|---|---|---|---|---|---|---|
| 0 | 0 | 1 | 2 | 3 | 4 | 5 | 6 | 7 |
| 1 | 8 | 9 | 10 | 11 | 12 | 13 | 14 | 15 |
| 2 | 16 | 17 | 18 | 19 | 20 | 21 | 22 | 23 |
| 3 | 24 | 25 | 26 | 27 | 28 | 29 | 30 | 31 |
| 4 | 32 | 33 | 34 | 35 | 36 | 37 | 38 | 39 |
| 5 | 40 | 41 | 42 | 43 | 44 | 45 | 46 | 47 |
| 6 | 48 | 49 | 50 | 51 | 52 | 53 | 54 | 55 |
| 7 | 56 | 57 | 58 | 59 | 60 | 61 | 62 | 63 |

(i,j) : Adresse transcodée

## Fig. 1

| ni\\nj | 0 | 1 | 2 | 3 | 4 | 5 | 6 | 7 |
|---|---|---|---|---|---|---|---|---|
| 0 | (0,0) | (0,1) | (1,0) | (2,0) | (1,1) | (0,2) | (0,3) | (1,2) |
| 1 | (2,1) | (3,0) | (4,0) | (3,1) | (2,2) | (1,3) | (0,4) | (0,5) |
| 2 | (1,4) | (2,3) | (3,2) | (4,1) | (5,0) | (6,0) | (5,1) | (4,2) |
| 3 | (3,3) | (2,4) | (1,5) | (0,6) | (0,7) | (1,6) | (2,5) | (3,4) |
| 4 | (4,3) | (5,2) | (6,1) | (7,0) | (7,1) | (6,2) | (5,3) | (4,4) |
| 5 | (3,5) | (2,6) | (1,7) | (2,7) | (3,6) | (4,5) | (5,4) | (6,3) |
| 6 | (7,2) | (7,3) | (6,4) | (5,5) | (4,6) | (3,7) | (4,7) | (5,6) |
| 7 | (6,5) | (7,4) | (7,5) | (6,6) | (5,7) | (6,7) | (7,6) | (7,7) |

## Fig. 3

(ni,nj) : code binaire du numéro de séquence
n=8*ni+nj = numéro de séquence

| i/j avant | 0 | 1 | 2 | 3 | 4 | 5 | 6 | 7 |
|---|---|---|---|---|---|---|---|---|
| i/j aprés | 0 | 7 | 1 | 6 | 2 | 5 | 3 | 4 |

## Fig. 4

Fig. 5

Fig. 6

| i/j | B2 | B1 | B0 | i'/j' | B2 | B'1 | B'0 |
|-----|----|----|----|-------|----|-----|-----|
| 0 | 0 | 0 | 0 | 0 | 0 | 0 | 0 |
| 1 | 0 | 0 | 1 | 4 | 1 | 0 | 0 |
| 2 | 0 | 1 | 0 | 2 | 0 | 1 | 0 |
| 3 | 0 | 1 | 1 | 6 | 1 | 1 | 0 |
| 4 | 1 | 0 | 0 | 1 | 0 | 0 | 1 |
| 5 | 1 | 0 | 1 | 5 | 1 | 0 | 1 |
| 6 | 1 | 1 | 0 | 3 | 0 | 1 | 1 |
| 7 | 1 | 1 | 1 | 7 | 1 | 1 | 1 |

Fig. 7

## Fig. 8

| | |
|---|---|
| Re[Re] | Re[Im] |
| Im[Re] | Im[Im] |

82
82

## Fig. 9

j colonnes

| | 0 | 1 | 2 | 3 | 4 | 5 | 6 | 7 |
|---|---|---|---|---|---|---|---|---|
| 0 | Re(Re) | Re(Re) | | | Re(Re) | Re(Im) | | |
| 1 | | | | .91 | | | | .92 |
| 2 | Re(Re) | Re(Re)−Im(Im) | | | Re(Re) | Im(Re)−Re(Im) | | |
| 3 | | | | | | | | |
| 4 | Re(Re) | Re(Re) | | | Re(Re) | Re(Im) | | |
| 5 | | | | .93 | | | | .94 |
| 6 | Im(Re) | Im(Re)+Re(Im) | | | Im(Re) | Re(Re)+Im(Im) | | |
| 7 | | | | | | | | |

i ↓ lignes i

## Fig. 10

| i | code i | | | i' | code i' | | |
|---|---|---|---|---|---|---|---|
| | B2 | B1 | B0 | | B'2 | B'1 | B'0 |
| 0 | 0 | 0 | 0 | 0 | 0 | 0 | 0 |
| 1 | 0 | 0 | 1 | 7 | 1 | 1 | 1 |
| 2 | 0 | 1 | 0 | 6 | 1 | 1 | 0 |
| 3 | 0 | 1 | 1 | 5 | 1 | 0 | 1 |
| 4 | 1 | 0 | 0 | 4 | 1 | 0 | 0 |
| 5 | 1 | 0 | 1 | 3 | 0 | 1 | 1 |
| 6 | 1 | 1 | 0 | 2 | 0 | 1 | 0 |
| 7 | 1 | 1 | 1 | 1 | 0 | 0 | 1 |

Fig. 11

Fig. 12

Fig. 13

Fig. 14

22

EP 0 398 830 B1

Fig. 15

Fig. 16

Fig. 17

23

Fig. 18

221 FIFO Entrée des coefficients

222 FIFO de sortie des pixels

205

206

203

202

201

200

204

DMx 0 1 2 3

205 206 207 208

Mx A

Mx B

211 *

212 *

213

214 ADD

X

Y

210 DMx 0 1 2 3

215 S0 216 S1 217 S2 218 S3

Mx

EP 0 398 830 B1

194

**Lecture mémoire**

Lignes paires 190

Lignes impaires 191

| Lecture | Opérations | Ecriture |
|---|---|---|
| MA→ A0 | | |
| MA→ A1 | | |
| MA→ A2 | A0+A1→ S0 | |
| MA→ A3 | A0-A1→ S1 | |
| MB→ A0 | A2+A3→ S2 | S0→ MA |
| MB→ A1 | A2-A3→ S3 | S1→ MA |
| MB→ A2 | A0+A1→ S0 | S2→ MA |
| MB→ A3 | A0-A1→ S1 | S3→ MA |
| | A2+A3→ S2 | S0→ MB |
| | A2-A3→ S3 | S1→ MB |
| | | S2→ MB |
| | | S3→ MB |

+2  +4  +4  +2

**Ecriture mémoire**

Lignes paires 192

Lignes impaires 193

## Fig. 19A

**Lecture mémoire**

Lignes paires / Lignes impaires

| Lecture | Opérations | Ecriture |
|---|---|---|
| MA→ A0 | | |
| MB→ A1 | | |
| MA→ A2 | A0-A1→ S0 | |
| MB→ A3 | A0+A1→ S1 | |
| MA→ A0 | A2-A3→ S2 | S0→ MB |
| MB→ A1 | A2+A3→ S3 | S1→ MA |
| MA→ A2 | A0-A1→ S0 | S2→ MB |
| MB→ A3 | A0+A1→ S1 | S3→ MA |
| | A2-A3→ S2 | S0→ MB |
| | A2+A3→ S3 | S1→ MA |
| | | S2→ MB |
| | | S3→ MA |

+2  +4  +4  +2

**Ecriture mémoire**

Lignes impaires / Lignes paires

## Fig. 19B

VARIANTE 3

VARIANTE 2

VARIANTE 1

Balayage + Permutation
1

TFR Ligne
211

Transposition + "bit reverse"
212

TFR Colonne
213

Transposition + "bit reverse"
214

VARIANTE 4 (Annulation des coefficients imaginaires)

VARIANTE 5 (Annulation des coefficients imaginaires)

TFR 2D
4

Treillis de calcul
22

3
Rotations

Fig. 20